# EUROPÄISCHE PATENTSCHRIFT

(11) **EP 0 297 668 B1**
(45) Veröffentlichungstag und Bekanntmachung des Hinweises auf die Patenterteilung: **28.09.1994**
(21) Anmeldenummer: 88201322.0
(22) Anmeldetag: 27.06.1988
(51) Int. Cl.: G06K 1/12, B41J 3/28, G11B 23/40

(54) **Verfahren zum Bedrucken plattenförmiger Informationsträger**
Method for printing on disc-shaped information carriers
Procédé d'impression sur des porteurs d'information en forme de disque

(30) Priorität: 01.07.1987 DE 3721651
(43) Veröffentlichungstag der Anmeldung: 04.01.1989
(73) Patentinhaber: POLYGRAM MANUFACTURING & DISTRIBUTION CENTRES GMBH, 30851 Langenhagen (DE); Philips and Du Pont Optical Company, 3435 SB Nieuwegein (NL)
(72) Erfinder: Ewaldt, Helmut, D-3162 Uetze-Hänigsen (DE)
(74) Vertreter: Rolfes, Johannes Gerardus Albertus

(56) Entgegenhaltungen:
- DE-B- 2 219 520
- DE-B- 2 304 723
- GB-A- 2 120 821
- US-A- 4 068 028
- US-A- 4 393 386

## Beschreibung

Die Erfindung bezieht sich auf ein Verfahren und eine entsprechende Vorrichtung zum Bedrucken plattenförmiger Informationsträger mit Label-Information in Form von Grafik und/oder Schrift, welche auf wenigstens einer Seite des Informationsträgers wenigstens in einem Teilbereich auf diesem aufgebracht wird, wie aus der DE-B- 2 304 723 bekannt.

Auf plattenförmigen Informationsträgern ist im Regelfalle eine sogenannte Label-Information angebracht, die u.a. über den Informationsinhalt des Informationsträgers informiert. Die Label-Information enthält im allgemeinen sowohl Schrift als auch Grafik. Bei optisch auslesbaren plattenförmigen Informationsträgern, beispielsweise den sogenannten Compact-Discs, ist die Label-Information auf einer Seite des Informationsträgers in einem breiten, konzentrisch zum Mittelloch angeordneten ringförmigen Bereich vorgesehen. Diese Label-Information wird nach bekannten Verfahren in einem Siebdruck- oder in einem Tampondruckverfahren aufgebracht, Bei beiden Verfahren müssen zunächst ein Film und anschließend ein Klischee hergestellt werden, deren Anfertigung Zeit benötigt und aufwendig ist. Darüber hinaus sind die bekannten Druckverfahren unflexibel, d.h. ein schneller Wechsel verschiedener Label-Informationen zum Bedrucken verschiedener Informationsträger ist bei hohen Maschinendurchsätzen nicht möglich. Es ist praktisch nicht möglich, jeden Informationsträger individuell zu kennzeichnen.

In der Datenverarbeitung werden in bekannter Weise als individuelle Tischdrucker solche Drucker verwendet, bei denen das Druckbild bei jedem Druckvorgang neu erzeugt wird, z.B. Nadelmatrix- oder Tintenstrahldrucker. Diese Art von Druckern findet in vielen Druckprozessen Verwendung. Verwiesen wird z.B. auf die GB-A-2 120 821, die einen Labeldrucker zeigt, der speziell zum Drucken von Etiketten verwendet werden kann. Eine andere Bauart, die ebenfalls geeignet ist zur Herstellung von ständig wechselnden Aufschriften, ist z.B. durch die US-A-4 393 386 bekannt geworden. Dabei geht es z.B. um das Drucken von Adressen auf Briefumschläge mit einem Tintenstrahldrucker. Diese bekannten Bauarten, bei denen die Drucker mit Datenverarbeitungsanlagen gekoppelt sind, haben den Vorteil, daß die zu druckenden Daten jederzeit geändert werden können.

Für die Lay-Out-Herstellung von Zeitungen und Zeitschriften sind z.B. Grafikprogramme bekannt, die es ermöglichen, Label-Information in der gewünschten Art und Form zunächst in einer Datenverarbeitungsanlage rein elektronisch zu erstellen. In diesem Stadium ist eine Anderung der Label-Information einfach möglich. Diese so in der Datenverarbeitungsanlage erstellte, noch rein elektronisch vorliegende Label-Information wird dann für einen Drucker aufbereitet und an diesen weitergeleitet. Die Aufbereitung der Label-Information besteht z.B. darin, daß diese in der jeweils gewünschten Struktur zeilenweise zerlegt wird, so daß ein Drucker sie entsprechend verarbeiten kann. Solche Programme sind in größer Zahl bekannt für Drucker, z.B. für Matrix- oder Tintenstrahldrucker in Datenverarbeitungsanlagen.

Durch die DE-B-2 219 520 ist ein Verfahren zur Herstellung einer lesbaren Kennzeichnung im Spiegel einer mit einer Rillenspirale zur Speicherung von abtastbaren Signalen versehenen Schall- oder Bildplatte bekannt geworden. Dabei wird zunächst mittels eines Schneidstichels oder einer energiereichen Strahlung eine Gravur im Spiegel einer Matrize der Platte in Form einer Spirale oder von einzelnen konzentrischen Kreisen als Linien- oder Punktraster eingearbeitet. Dabei wird zur bildhaften Darstellung einer lesbaren Kennzeichnung der Schneidstichel an bestimmten Stellen angehoben oder der Strahl an bestimmten Stellen unterbrochen. Sodann wird von der Matrize in an sich bekannter Weise eine Vervielfältigung im Präge- oder Preßverfahren hergestellt.

Schließlich ist durch die DE-B-2 304 723 eine Vorrichtung zum Aufdrucken einer lesbaren Kennung auf den Etikettbereich eines ein- oder beidseitig abspielbaren, scheibenförmigen Aufzeichnungsträgers aus Kunststoff, insbesondere einer Schallplatte, bekannt geworden. Diese Vorrichtung soll in der Weise ausgebildet werden, daß ein Wenden des Trägerkörpers ohne manuellen Eingriff und ohne Beschädigung und Beschmutzung des Aufzeichnungsbereiches durchgeführt werden kann. Dies wird dadurch erreicht, daß wenigstens eine erste, der einen Seite des Aufzeichnungsträgers zugeordnete und wenigstens eine weitere, der anderen Seite des Aufzeichnungsträgers zugeordnete Druckvorrichtung vorgesehen sind, wobei die erste Druckvorrichtung im Zuge des unteren Trums und die weitere Druckvorrichtung im Zuge des oberen Trums eines endlosen, mit Durchbrüchen für die Aufnahme, Halterung und Transport von Aufzeichnungsträgern versehenen und schrittweise bewegbaren Transportbandes angeordnet ist. Die Informationsträger werden nacheinander den einzelnen Bearbeitungsstationen zugeführt. Dabei wird der in einer Palette befestigte Informationsträger im Arbeitstakt des Transportbandes jeweils um eine Station weiter bewegt, so daß er beim nächsten Takt unter einer ersten Druckeinheit und beim übernächsten Takt unter einer zweiten Druckeinheit zu liegen kommt. In beiden Druckeinheiten erhält der Informationsträger im ebenen Etikettbereich der Oberseite je einen Grundfarbauftrag. Während zweier folgender Arbeitstakte kann die Grundfarbe trocknen. Der nächste Arbeitstakt bringt dann den Informationsträger in einen weiteren Druckbereich, wo er mit der Schriftinformation versehen wird. Danach wird der Informationsträger gewendet und in gleicher Art und Folge auf der Rückseite bedruckt.

Der Erfindung liegt die Aufgabe zugrunde, ein Verfahren zum Bedrucken plattenförmiger Informationsträger der eingangs genannten Art zu schaffen, welches mit einfachen Mitteln auf zuverlässige Weise die Herstellung qualitativ hochwertiger Drucke auf den Informationsträger ermöglicht.

Diese Aufgabe wird gemäß der Erfindung, wie sie in Anspruch 1 definiert ist, dadurch gelöst,
a) daß die Label-Information mittels einer Datenverarbeitungsanlage erstellt und für einen Laserdrucker aufbereitet wird,
b) daß für jeden Druckvorgang eine laserempfindliche Belichtungswalze entsprechend einer Computer-Grafik von einem Laser belichtet wird,
c) daß die belichteten Stellen über einen Farbbehälter benetzt und auf eine Druckwalze übertragen werden und
d) daß diese Druckinformation auf je einen Informationsträger übertragen wird.

Damit werden qualitativ hochwertige Drucke erzielt, da ein Laserdrucker eine höhere Auflösung ermöglicht, so daß man feinere und damit bessere Strukturen erhält.

Die aufbereitete und an den Laserdrucker weitergeleitete Label-Information steuert nun den Laserdrucker, der den Informationsträger mit der Label-Information bedruckt. Die Erfindung ermöglicht somit eine schnelle Erstellung der Label-Information, ebenso eine schnelle Änderung sowohl während des Erstellungsvorganges als auch später. In der Datenverarbeitungsanlage können verschiedene Label-Informationen in Form einer Datei erstellt werden, die auf Wunsch abgerufen und auf dem Informationsträger mit Hilfe des Laserdruckers aufgebracht werden können. Die Bauweise ermöglicht somit einen schnellen Wechsel zwischen verschiedenen Label-Informationen beim Bedrucken der Informationsträger. Gegenüber dem Stand der Technik ergeben sich kürzere Anlaufzeiten, so daß in sehr viel kürzerer Zeit eine neue Label-Information erstellt und die Informatiosnträger einer neuen Serie damit bedruckt werden können. Auch können z.B. Musterandrucke in kurzer Zeit erstellt werden. Damit ergeben sich beim Anlauf neuer Serien keine Zeitverzögerungen mehr durch Erstellung der neuen Label-Information, wie dies z.B. bei dem Stand der Technik mit Hilfe der Klischees erforderlich war. Infolge der äußerst flexiblen Bedruckung mit verschiedenen Label-Informationen ergibt sich insbesondere für kleine Stückzahlen ein Zeit- und Kostenvorteil, der das Auflegen sehr kleiner Serien mit eigenem Labelaufdruck überhaupt erst wirtschaftlich möglich macht. Programme, die für die Bearbeitung der Label-Information in der Datenverarbeitungsanlage benötigt werden, z.B. Grafikprogramme oder Programme zum Aufarbeiten der Information für den Drucker, sind am Markt erhältlich und in Datenverarbeitungsanlagen meist ohnehin vorgesehen.

Zum Schutz des Gedruckten ist in vielen Fällen eine Ausgestaltung des Verfahrens der Erfindung vorteilhaft, wobei der bedruckte Informationsträger mit einer transparenten Schutzschicht versehen wird.

In einer weiteren vorteihaften Ausgestaltung der Erfindung können auch andere Verfahren zum Bedrucken zur Anwendung kommen. Dabei kann z.B. die Grundinformation (Marke, Hersteller, usw.) in einem üblichen Tampon- oder Siebdruckverfahren aufgebracht werden, während die zusätzliche variable Information (Titel, Komponist, Nummern, individuelle Kennzeichnung, usw.) mit dem oben genannten erfindungsgemäßen Verfahren erstellt wird. Das Verfahren läßt sich ohne viel Aufwand mit den nach dem Stand der Technik bekannten Siebdruck- oder Tampondruckverfahren kombinieren. Mit diesen bekannten Verfahren laßt sich z.B. auf leichte Weise ein farbiger Hintergrund erstellen, der dann mittels des Verfahrens nach der Erfindung mit weiteren, detaillierten Informationen, die für verschiedene Serien verschieden sein können, bedruckt werden kann.

Nach einer weiteren Ausgestaltung der Erfindung ist vorgesehen, daß die Label-Information jedes einzelnen Informationsträgers mit einer individuellen Kennzeichnung versehen wird. Dieses Verfahren bietet die wichtige Möglichkeit, plattenförmige Informationsträger einer Serie mit gleichem Informationsinhalt mit individuellen Kennungen zu versehen. Dies ist beispielsweise bei den sogenannten CD-ROM-Platten von Interesse. Eine individuelle Kennzeichnung ermöglicht die Rückverfolgung eines bestimmten Exemplars, d.h. die Kontrolle darüber, ob der Benutzer dieses Exemplars dieses rechtmäßig erworben hat. Diese Möglichkeit ist insbesondere im Zusammenhang mit dem Urheberrechtsschutz von Bedeutung. Eine solche individuelle Kennzeichnung kann auch für Musik enthaltende Informationsträger von Bedeutung sein, da sie ein Feststellen von sogenannten Raubpressungen, d.h. von Dritten nicht rechtens erstellten Pressungen mit Platten gleichen Informationsinhaltes, ermöglicht.

Die Erfindung bezieht sich ferner auf eine Vorrichtung zur Durchführung des erfindungs gemäßen Laserdruckverfahrens. Diese Vorrichtung ist gekennzeichnet
a) durch eine Datenverarbeitungsanlage zur Erstellung und Aufbereitung einer Label-Information für einen Laserdrucker,
b) durch eine von einem Laser belichtbare Belichtungswalze, der ein Farbbehälter zugeordnet ist, und
c) durch eine mit der Belichtungswalze zusammenwirkende Druckwalze des Druckers, die ihrerseits in unmittelbarer Nähe einer Transporteinrichtung für die zu bedruckenden Informationsträger, z.B. CD-Platten, angeordnet ist.

In der Zeichnung ist in den Fig. 1 bis 3 ein Ausführungsbeispiels des Gegenstandes gemäß der Erfindung schematisch dargestellt.
Fig. 1 zeigt eine schematische Vorrichtung zum Bedrucken plattenförmiger Informationsträger mit einem Laserdrucker,
Fig. 2 und 3 zeigen Einzelheiten gemäß Fig. 1.

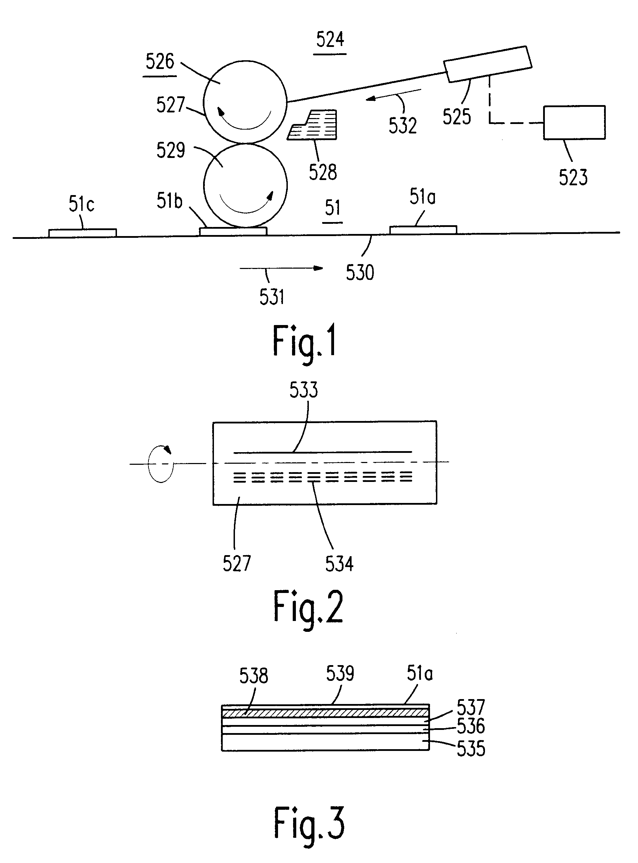

Fig. 1 zeigt schematisch eine Vorrichtung zum Bedrucken von Informationsträgern 51 mit einem Laserdrucker 524. Dieser enthält einen Laser 525 zum Belichten einer Belichtungswalze 526, die mit einer elektrisch aufladbaren Schicht 527 versehen ist (z.B. Selenwalze). Die Belichtungswalze 526, der ein Farbbehälter 528 zugeordnet ist, arbeitet zusammen mit einer Druckwalze 529. Mit 530 ist eine Transporteinrichtung für in Richtung 531 transportierte, zu bedruckende Informationsträger 51 bezeichnet. Eine Datenverarbeitungsanlage 523 liefert die Label-Information und steuert den Laser 525 an. Für jeden einzelnen zu bedruckenden Informationstäger 51, z.B. CD-Platte, erfolgt ein gesonderter Druckvorgang. Gemäß Fig. 1 ist die Platte 51a fertig bedruckt (siehe Fig. 2), die Platte 51b wird gerade bedruckt, und die Platte 51c ist noch nicht bedruckt.

Die Walze 526 wird entsprechend einer Computergrafik (Label-Information) belichtet. Die Farbe aus dem Behälter 528 wird auf die Druckwalze 529 und von hier auf die vorbehandelten, zu bedruckenden CD-Platten 51c übertragen. Die bedruckte CD-Platte 51a wird anschließend mit einer transparenten Kratzschutzschicht versehen.

Fig. 2 zeigt eine Ansicht der Belichtungswalze in Richtung 532. Dabei ist der Belichtungsbereich des Lasers 525 mit 533 und der belichtete Bereich mit 534 bezeichnet.

Fig. 3 zeigt eine fertige CD-Platte 51a. Die eigentliche Information der CD-Platte befindt sich zwischen der Polykarbonatschicht 535 und der Metallisierung 536. Mit 537 ist ein Schutzlack, mit 538 die gemäß der Erfindung aufgebrachte Druckschicht und mit 539 eine transparente Kratzschutzschicht, z.B. UV-Lack, bezeichnet.

Die Verwendung eines Laserdruckers erfordert wenig Aufwand und liefert qualitativ hochwertige Drucke.

## Patentansprüche

1. Verfahren zum Bedrucken plattenförmiger Informationsträger (51) mit Label-Information in Form von Grafik und/oder Schrift, welche auf wenigstens einer Seite des Informationsträgers (51) wenigstens in einem Teilbereich auf diesem aufgebracht wird, dadurch gekennzeichnet,
a) daß die Label-Information mittels einer Datenverarbeitungsanlage (523) erstellt und für einen Laserdrucker (524) aufbereitet wird,
b) daß für jeden Druckvorgang eine laserempfindliche Belichtungswalze (526) entsprechend einer Computer-Grafik von einem Laser (525) belichtet wird,
c) daß die belichteten Stellen über einen Farbbehälter (528) benetzt und auf eine Druckwalze (529) übertragen werden und
d) daß diese Druckinformation auf je einen Informationsträger (51) übertragen wird.

2. Verfahren nach Anspruch 1, dadurch gekennzeichnet, daß der bedruckte Informationsträger (51a) mit einer transparenten Schutzschicht (539) versehen wird.

3. Verfahren nach Anspruch 1 oder 2, dadurch gekennzeichnet, daß die Label-Information (538) jedes einzelnen Informationsträgers (51) mit einer individuellen Kennzeichnung versehen wird.

4. Verfahren nach einem der Ansprüche 1 bis 3, dadurch gekennzeichnet, daß auch andere Verfahren zum Bedrucken zur Anwendung kommen.

5. Vorrichtung zur Durchführung eines Verfahrens nach einem der Ansprüche 1 bis 4, gekennzeichnet
a) durch eine Datenverarbeitungsanlage (523) zur Erstellung und Aufbereitung einer Label-Information für einen Laserdrucker (524),
b) durch eine von einem Laser (525) belichtbare Belichtungswalze (526), der ein Farbbehälter (528) zugeordnet ist, und
c) durch eine mit der Belichtungswalze (526) zusammenwirkende Druckwalze (529) des Druckers (524), die ihrerseits in unmittelbarer Nähe einer Transporteinrichtung (530) für die zu bedruckenden Informationsträger (51c),z.B. CD-Platten, angeordnet ist.

## Claims

1. A method of printing label information in the form of graphics and/or characters on disc-shaped information carriers (51), which information is provided on the information carrier (51) on at least one side thereof in at least one area, characterised in that
a) the label information is generated and prepared for a laser printer (524) by means of a data-processing system (523),
b) for each printing cycle a laser-sensitive exposure cylinder (526) is illuminated by a laser (525) in conformity with a computer graphics program,
c) the exposed areas are wetted via an ink container (528) and transferred to a printing cylinder (529), and
d) said printing information is transferred to one information carrier (51) at a time.

2. A method as claimed in Claim 1, characterised in that after printing the information carrier (51a) is provided with a transparent protective coating (539).

3. A method as claimed in Claim 1 or 2, characterised in that the label information (538) of each individual information carrier (51) includes an individual marking.

4. A method as claimed in any one of the Claims 1 to 3, characterised in that in addition other printing methods are used.

5. An apparatus for carrying out a method as claimed in any one of the Claims 1 to 4, characterised by
a) a data-processing system (523) for generating and preparing label information for a laser printer (524),
b) an exposure cylinder (526) which can be illuminated by a laser and which has an associated ink container (528), and
c) a printing cylinder (529) which cooperates with the exposure cylinder (526) and which is arranged in the direct proximity of a transport device (530) for the information carriers (51c) to be printed, for example Compact Discs.

## Revendications

1. Procédé pour imprimer sur des porteurs d'information en forme de disque (51) de l'information de label sous forme de graphique et/ou d'écriture, qui est appliquée sur au moins une face du porteur d'information (51) au moins dans une partie sur ce dernier, caractérisé en ce que
a) l'information de label est établie à l'aide d'une installation de traitement de données (523) et préparée pour une imprimeuse au laser (524),
b) pour chaque processus d'impression un rouleau d'exposition sensible au laser (526) est irradié conformément à un graphique d'ordinateur par un laser (525),
c) les endroits exposés sont humectés à l'aide d'un bac à encre (528) et transmis à un cylindre d'impression (529) et
d) cette information d'impression est chaque fois transmise à un porteur d'information (51).

2. Procédé selon la revendication 1, caractérisé en ce que le support d'information imprimé (51a) est muni d'une couche protectrice transparente (539).

3. Procédé selon la revendication 1 ou 2, caractérisé en ce que l'information de label (538) de chaque porteur d'information individuel (51) est munie d'une identification individuelle.

4. Procédé selon l'une des revendications 1 à 3, caractérisé en ce que d'autres procédés pour l'impression peuvent également être appliqués.

5. Dispositif pour la mise en oeuvre d'un procédé selon l'une des revendications 1 à 4, caractérisé
a) par une installation de traitement de données (523) pour l'établissement et la préparation d'une information de label pour une imprimeuse au laser (524),
b) par un rouleau d'exposition (526) pouvant être irradié par un laser (525) et correspondant à un bac à encre (528) et
c) par un cylindre d'impression (529) de l'imprimeuse (524) coopérant avec le rouleau d'exposition (526) et disposée, de son côté, à proximité immédiate d'un dispositif de transport (530) pour le porteur d'information à imprimer (51c) par exemple des disques audionumériques.
